**Europäisches Patentamt**

**European Patent Office**

**Office européen des brevets**

(19)

(11) Veröffentlichungsnummer: **0 149 079
B1**

(12) # EUROPÄISCHE PATENTSCHRIFT

(45) Veröffentlichungstag der Patentschrift:
**07.01.88**

(21) Anmeldenummer: **84114508.9**

(22) Anmeldetag: **29.11.84**

(51) Int. Cl.⁴: **F 16 F 1/38,** B 60 G 7/00,
F 16 C 33/22

(54) **Elastisches Dreh-Gleitlager.**

(30) Priorität: **23.12.83 DE 3346666**

(43) Veröffentlichungstag der Anmeldung:
**24.07.85 Patentblatt 85/30**

(45) Bekanntmachung des Hinweises auf die Patenterteilung:
**07.01.88 Patentblatt 88/1**

(84) Benannte Vertragsstaaten:
**FR GB IT SE**

(56) Entgegenhaltungen:
**FR - A - 2 072 826
GB - A - 213 019
GB - A - 1 041 820**

(73) Patentinhaber: **Lemförder Metallwaren AG,
Postfach 1220, D-2844 Lemförde (DE)**

(72) Erfinder: **Münch, Günter, Bergstrasse 53, D-2845 Damme
(DE)**

**Beschreibung**

Die Erfindung betrifft ein elastisches Dreh-Gleitlager der Gattung nach dem Oberbegriff des Patentanspruches 1.

Bekannt sind diese gattungsgemässen Merkmale solcher Dreh-Gleitlager aus den DE-A-2059901 und 2362504. Gleitlager nach diesen Vorveröffentlichungen werden vor allem für die Radaufhängung verwendet, um schwingende Drehbewegungen zweier durch das Lager miteinander verbundener Teile mit geringem Torsionsmoment zu ermöglichen und dabei radial mit weicher Federkennung dämpfend zu wirken. Dies wird durch den Gelenkkörper aus Gummi oder einem anderen Elastomer erreicht. In Anpassung an die auftretende Belastung muss dieser Gelenkkörper ausreichend gross bemessen sein, d. h. eine angepasste Federkennung aufweisen. Zur Verbesserung der angestrebten Wirkung wird meistens ein Tragrohr in den Gelenkkörper eingebettet, so dass dieses Tragrohr aussen und innen mit dem elastischen Werkstoff ummantelt ist, wobei der elastische Werkstoff aussen und innen unterschiedliche Federkennungen aufweisen kann (DE-A-2362504). Ein bei den Drehbewegungen geringes Torsionsmoment wird bei der DE-A-2059901 durch an der Lauffläche des Gelenkkörpers angeordnete, mit Dauerschmiermittel gefüllte Ausnehmungen erreicht. Eine axiale Bewegung zwischen Gelenkkörper und Gleitbüchse wird bei diesen und vergleichbaren bekannten Ausbildungen, z. B. entsprechend DE-A-1525041, durch radiale Flansche des einen Teils verhindert, die an Ringschultern des anderen Teils anliegen. Ein solches elastisches Dreh-Gleitlager erfordert genaue Abmessungen der Bausysteme und kleine Montagetoleranzen, vor allem wenn grosse Winkelauslenkungen zugelassen werden sollen, ohne die Lebensdauer des Lagers zu beinträchtigen.

Es ist Aufgabe der Erfindung, ein der Gattung entsprechendes Lager in der Weise auszubilden, dass es ohne Verringerung seiner Funktionseigenschaften zusätzlich Montagetoleranzen in Grenzen ausgleicht und dabei in der Herstellung nicht verteuert wird.

Die Erfindung löst diese Aufgabe durch eine Ausbildung mit Merkmalen nach dem Patentanspruch 1. Weitere vorteilhafte Gestaltungsmerkmale sind in den Unteransprüchen angegeben.

Ein vor allem mit den Merkmalen des Patentanspruches 1 ausgestattetes elastisches Dreh-Gleitlager weist bei relativ geringen Aussenabmessungen einen ausreichend grossen Gelenkkörper aus elastischem Werkstoff auf, der vor allem als Dämpfungselement für die radialen Lagerbelastungen wirksam ist. Ausreichend grosse Trag- und Laufflächen sorgen für ein geringes Torsionsmoment bei radial weicher, dämpfender Federkennung. Wesentlich ist jedoch der Vorteil eines zulässigen axialen Spielraums für eine Bewegung des einen Teils gegenüber dem anderen Teil, so dass Abweichungen der Einbaumasse in grösseren Toleranzen zugelassen werden können, ohne die hohen Anforderungen an die Eigenschaften des Lagers zu beeinträchtigen.

Auf der Zeichnung sind einige Ausführungsbeispiele der Erfindung im Zusammenhang mit weiteren Einzelheiten erläutert. Auf der Zeichnung zeigen:

Fig. 1 einen Schnitt in Achsebene des Lagers,

Fig. 2 den gleichen Schnitt bei einer abgeänderten Ausführungsform und

Fig. 3 ebenfalls einen Achsschnitt einer weiteren Ausführungsform.

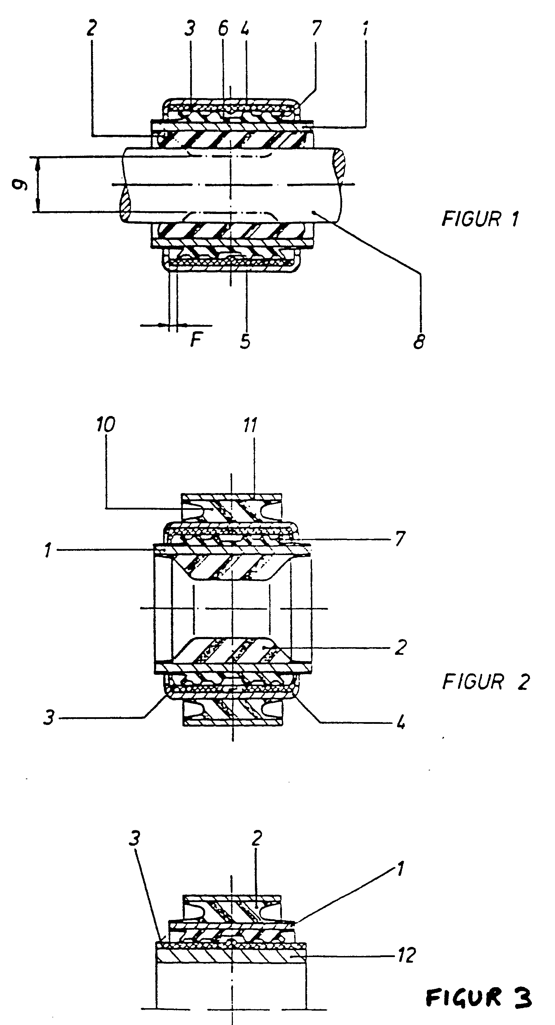

Bei den Ausführungsbeispielen ist ein Tragrohr 1 innerhalb eines Gelenkkörpers 2 aus elastischem Werkstoff angeordnet, so dass das Tragrohr 1 aussen und innen mit Elastomer ummantelt ist. Der Gelenkkörper 2 ist am Aussenumfang mit Ausnehmungen versehen, die mit Schmierstoff gefüllt sind. Der Gelenkkörper 2 ist nach dem Beispiel der Fig. 1 innerhalb einer Gleitbüchse 3 angeordnet, die in dem Aussenrohr 4 gehalten ist. Die Gleitfläche der Gleitbüchse 3 ist dabei länger ausgeführt als die Gleitfläche am Umfang des Gelenkkörpers 2, so dass letzterer in der Gleitbüchse 3 axial beweglich ist. Eine Verliersicherung ermöglicht die Montage des Lagers vor dem Versand und verhindert das Auseinanderfallen des Lagers vor dem Einbau. Diese Verliersicherung besteht nach dem Ausführungsbeispiel aus einer am Innenumfang der Gleitbüchse 3 ausgebildeten Tragrippe 5, die in eine Ringausnehmung 6 am Aussenumfang des Gelenkkörpers 2 eingreift. Die Breite der Ringausnehmung 6 ist dabei um das gewünschte Axialspiel des Gelenkkörpers 2 in der Gleitbüchse 3 grösser als die Breite der Tragrippe 5. An den Enden der Gleitfläche des Gelenkkörpers 2 sind bei dem Beispiel in Fig. 1 Dichtlippen 7 vorgesehen, die aber bei geringerer Umweltbelastung auch entfallen können, insbesondere wenn die Umbördelung des Aussenrohres 4 zur Sicherung der Gleitbüchse 3 bis nahezu auf den Aussenmantel der Tragkörperenden heruntergeführt sind. Bei der Montage wird das Aussenrohr 4 in ein Lagerauge des einen Teiles eingesetzt, während der Gelenkkörper 2 mit seiner zentralen Bohrung unter Vorspannung des elastischen Werkstoffes des Gelenkkörpers z. B. auf einen Zapfen, eine Welle 8 oder dgl. des anderen Teiles aufgesetzt wird. Dabei verformt sich der Gelenkkörper aus seiner ursprünglichen, mit strichpunktierten Linien 9 dargestellten Kontur in die mit vollen Linien gezeichnete Form. Bei dem Ausführungsbeispiel nach Fig. 1 ist der Gelenkkörper 2 aus der Mittellage heraus nach beiden Seiten um das Mass F axial beweglich.

Die Gestaltung des Ausführungsbeispieles nach der Fig. 2 entspricht in wesentlichen Teilen der Ausbildung nach dem Beispiel in Fig. 1. Das Lager ist hier vor seiner Montage im Fahrzeug dargestellt. In Abweichung von dem Ausführungsbeispiel entsprechend Fig. 1 wird die Verliersicherung dadurch gebildet, dass die Gleitbüchse an ihren beiden Enden nach innen vorspringende Radialflansche aufweist, die mit Ringschultern des Gelenkkörpers 2 bzw. mit an den Enden des Gelenkkörpers angeordneten Dichtungslippen 7 zusammenwirken. Ausserdem ist dargestellt, dass das Aussenrohr 4 am Aussenumfang mit einem weiteren Ringkörper 10 festhaftend verbunden sein kann, der seinerseits in ein äusseres Aufnahmerohr 11 eingesetzt und mit diesem eventuell ebenfalls festhaftend verbunden ist. Der innen angeordnete Gelenkkörper 2 beeinflusst Dämpfung, Radialkennung und durch seine Vorspannung den lageorientierten Festsitz z. B. auf einer Welle. Aus Gründen der Dauerhaltbarkeit soll die radiale Einfederungsrate grösser sein als bei dem äusseren Ringkörper 10 aus elastischem Material. Dies ist erreichbar durch unterschiedliche Gestaltungsmöglichkeiten, z. B. durch einen Gelenkkörper 2 mit zylindrischem Querschnitt, durch die Ausbildung des Ringkörpers 10 mit variierender Kontur, durch Wahl unterschiedlicher elastischer Werkstoffe für den Gelenkkörper 2 und den Ringkörper 10 sowie durch unterschiedliche Shorehärten für den Gelenkkörper 2 und für den Ringkörper 10 bei gleichem Grundwerkstoff. Unterschiedliche Gestaltungsformen des Ringkörpers 10 werden durch die Stirnausnehmungen an den beiden Seiten in dem Beispiel der Fig. 2 veranschaulicht. Dadurch lässt dieser Ringkörper 10 aus elastischem Werkstoff bei kardanischer Verkantung gegenüber dem Gelenkkörper 2 grössere Verformungen zu. Für grössere kardanische Auslenkungen kann die Bohrung des Aufnahmerohres 11 sich nach beiden Aussenseiten in Kegelform im Durchmesser vergrössern bzw. direkt von der Mitte aus beidseitig trompetenförmig aufweiten. Das Ausführungsbeispiel in Fig. 2 zeigt ausserdem die Ausbildung der Gleitbüchse 3 in zwei Teilen mit einem mittigen Schnappverschluss zur Verbindung der beiden Teile miteinander.

Die Fig. 3 zeigt beispielhaft die Umkehrung der Anordnung nach den Fig. 1 oder 2. Hier ist der Gelenkkörper 2 mit dem äusseren Lagerteil verbindbar, während die Gleitbüchse 3 auf einem Trägerrohr, einer Welle 12 oder dgl. angeordnet ist. Als Verliersicherung zum Zusammenhalten der beiden Teile 2 und 3 während des Transports vor dem Einbau ist auch hier eine Tragrippe 5 auf dem Aussenumfang der Gleitbüchse 3 dargestellt, die in eine breite Ringnut 6 am Aussenumfang des Gelenkkörpers 2 einfasst, wie es zu dem Beispiel in Fig. 1 erläutert wurde. Besonderheiten, wie sie zu den Fig. 1 und 2 erläutert wurden, sind auch bei einer solchen Lageranordnung anwendbar.

### Patentansprüche

1. Elastisches Dreh-Gleitlager für schwingende Bewegungen für zwei gelenkig miteinander verbundene Teile in Kraftfahrzeugen, bei dem ein Gelenkkörper (2) aus elastischem Werkstoff haftend mit dem einen Teil verbunden ist und mit seiner am Umfang Ausnehmungen für Schmierstoff aufweisenden Gleitfläche auf einer Gegenfläche einer mit dem anderen Teil verbundenen Gleitbüchse (3) beweglich angeordnet ist, dadurch gekennzeichnet, dass der Gelenkkörper (2) gegenüber der Gleitbüchse (3) innerhalb eines Spielraumes (F) axial beweglich gelagert ist.

2. Elastisches Dreh-Gleitlager nach Anspruch 1, dadurch gekennzeichnet, dass zwischen der Gleitbüchse (3) und dem Gelenkkörper (2) radiale Vorsprünge (5, 6) eine ausserhalb des axialen Spielraumes wirksame Verliersicherung bilden.

3. Elastisches Dreh-Gleitlager nach den Ansprüchen 1 und 2, dadurch gekennzeichnet, dass die radialen Vorsprünge aus einer umlaufenden Tragrippe (5) und einer Ringnut (6) bestehen, in die Tragrippe (5) eingreift und deren Breite um den axialen Spielraum grösser ist als die Breite der Tragrippe.

4. Elastisches Dreh-Gleitlager nach den Ansprüchen 1 bis 3, dadurch gekennzeichnet, dass der Gelenkkörper (2) an seinen Enden Dichtlippen (7) aufweist, die an der Lauffläche der Gleitbüchse (3) anliegen.

5. Elastisches Dreh-Gleitlager nach den Ansprüchen 1 und 2, dadurch gekennzeichnet, dass die Gleitbüchse (3) an ihren Enden nach innen vorspringende Anschlagbunde für den Gelenkkörper (2) aufweist.

6. Elastisches Dreh-Gleitlager nach Anspruch 5, dadurch gekennzeichnet, dass die Anschlagbunde der Gleitbüchse (3) gegen Ringschultern bzw. Dichtlippen (7) an den Enden des Gelenkkörpers (2) wirksam sind.

### Claims

1. Elastic rotary sliding bearing for oscillating movements for two components connected articulatedly to one another in motor vehicles, in which an articulated body (2) of elastic material is connected adhesively to one component and is arranged movably with its sliding surface with recesses around the periphery for lubricant on a counter-surface of a slide bush (3) connected to the other component, characterised in that the articulated body (2) runs on an axially movable bearing in relation to the slide bush (3) within a clearance (F).

2. Elastic rotary sliding bearing according to claim 1, characterised in that between the slide bush (3) and the articulated body (2), radial projections (5, 6) form a loss safety device effective outside the axial clearance.

3. Elastic rotary sliding bearing according to claims 1 and 2, characterised in that the radial projections consist of a surrounding carrier rib (5) and a ring groove (6) in which the carrier rib (5) engages, the width of which is greater than the width of the carrier rib by the axial clearance.

4. Elastic rotary sliding bearing according to claims 1 to 3, characterised in that the articulated body (2) has at its ends sealing lips (7) which lie against the running surface of the slide bush (3).

5. Elastic rotary sliding bearing according to claims 1 and 2, characterised in that the slide bush (3) has at its ends stop collars for the articulated body (2) which project inwards.

6. Elastic rotary sliding bearing according to claim 5, characterised in that the stop collars of the slide bush (3) are effective against ring shoulders or sealing lips (7) at the ends of the articulated body (2).

## Revendications

1. Palier lisse élastique pour arbre tournant, pour mouvements oscillants de deux éléments reliés l'un à l'autre de façon articulée dans des véhicules automobiles, dans lequel un bloc d'articulation (2) en matière élastique est relié par adhérence à l'un des éléments et est disposé pour pouvoir se déplacer par sa surface de glissement qui présente sur sa périphérie des évidements destinés à còntenir un lubrifiant, sur une contre-surface d'une douille de glissement (3) reliée à l'autre élément, caractérisé en ce que le bloc d'articulation (2) peut se déplacer axialement par rapport à la douille de glissement (3) dans les limites d'un jeu (F).

2. Palier lisse élastique pour arbre tournant selon la revendication 1, caractérisé en ce que des saillies radiales (5, 6) prévues entre la douille de glissement (3) et le bloc d'articulation (2) forment un verrou de sûreté qui intervient en dehors du jeu axial.

3. Palier lisse élastique pour arbre tournant selon les revendications 1 et 2, caractérisé en ce que les saillies radiales sont constituées par une nervure porteuse périphérique (5) et une gorge annulaire (6), dans laquelle la nervure porteuse (5) est engagée et dont la largeur est supérieure à la largeur de la nervure porteuse d'une valeur égale à l'espace de jeu axial.

4. Palier lisse élastique pour arbre tournant selon les revendications 1 à 3, caractérisé en ce que le bloc d'articulation (2) présente à ses extrémités des lèvres détanchéité (7) qui s'appuient contre la surface de glissement de la douille de glissement (3).

5. Palier lisse élastique pour arbre tournant selon les revendications 1 et 2, caractérisé en ce que la douille de glissement (3) présente à ses extrémités des collerettes de butée en saillie vers l'intérieur qui retiennent le bloc d'articulation (2).

6. Palier lisse élastique pour arbre tournant selon la revendication 5, caractérisé en ce que les collerettes de butée de la douille de glissement (3) agissent contre des épaulements annulaires ou des lèvres d'étanchéité (7) prévues aux extrémités du bloc d'articulation (2).

0149079

FIGUR 1

FIGUR 2

FIGUR 3